# FASCICULE DE BREVET EUROPEEN

(11) **EP 2 523 919 B1**
(45) Date de publication et mention de la délivrance du brevet: **10.07.2013**
(21) Numéro de dépôt: 11704267.1
(22) Date de dépôt: 10.01.2011
(51) Int. Cl.: C03C 17/245

(54) **MATERIAU PHOTOCATALYTIQUE ET VITRAGE OU CELLULE PHOTOVOLTAIQUE COMPRENANT CE MATERIAU**
FOTOKATALYTISCHES MATERIAL UND GLASSCHEIBE ODER PHOTOVOLTAIKZELLE MIT DIESEM MATERIAL
PHOTOCATALYTIC MATERIAL AND GLASS SHEET OR PHOTOVOLTAIC CELL INCLUDING SAID MATERIAL

(30) Priorité: 11.01.2010 FR 1050142
(43) Date de publication de la demande: 21.11.2012
(73) Titulaire: Saint-Gobain Glass France, 92400 Courbevoie (FR)
(72) Inventeur: NGHIEM, Bernard, F-60190 Arsy (FR); AGUIAR, Rosiana, F-75018 Paris (FR)
(74) Mandataire: Teyssedre, Laurent
(86) Numéro de dépôt international: PCT/FR2011/050033
(87) Numéro de publication internationale: WO 2011/083283

(56) Documents cités:
- WO-A2-2008/132397
- DE-A1- 19 845 291
- FR-A1- 2 924 274
- US-A1- 2004 150 326

## Description

L'invention se rapporte au domaine des matériaux comprenant un substrat en verre muni d'un revêtement photocatalytique.

Les revêtements photocatalytiques, notamment ceux à base de dioxyde de titane, sont connus pour conférer des propriétés autonettoyantes et antisalissure aux substrats qui en sont munis. Deux propriétés sont à l'origine de ces caractéristiques avantageuses. L'oxyde de titane est tout d'abord photocatalytique, c'est-à-dire qu'il est capable sous un rayonnement adéquat, généralement un rayonnement ultraviolet, de catalyser les réactions de dégradation de composés organiques. Cette activité photocatalytique est initiée au sein de la couche par la création d'une paire électron-trou. En outre, le dioxyde de titane présente une hydrophilie extrêmement prononcée lorsqu'il est irradié par ce même type de rayonnement. Cette forte hydrophilie, parfois qualifiée de « super-hydrophilie », permet l'évacuation des salissures minérales sous ruissellement d'eau, par exemple d'eau de pluie. De tels matériaux, en particulier vitrages, sont décrits par exemple dans la demande EP-A-0 850 204.

Le dioxyde de titane possède un fort indice de réfraction, qui entraîne des facteurs de réflexion lumineuse importants pour les substrats munis de revêtements photocatalytiques. Cela constitue un inconvénient dans le domaine des vitrages pour le bâtiment, et plus encore dans le domaine des cellules photovoltaïques, pour lesquelles il est nécessaire de maximiser la transmission vers le matériau photovoltaïque, et donc de minimiser toute absorption et réflexion du rayonnement solaire. Il existe pourtant un besoin de munir les cellules photovoltaïques d'un revêtement photocatalytique, car le dépôt de salissures est capable de réduire l'efficacité des cellules photovoltaïques d'environ 6% par an. Ce chiffre est bien évidemment dépendant de la localisation géographique des cellules.

Pour diminuer le facteur de réflexion lumineuse, il est possible de réduire l'épaisseur des revêtements photocatalytiques, mais cela se fait au détriment de leur activité photocatalytique.

L'invention a pour but de proposer des matériaux photocatalytiques à base d'oxyde de titane alliant à la fois une forte activité photocatalytique et de faibles facteurs de réflexion lumineuse.

A cet effet, l'invention a pour objet un matériau comprenant un substrat en verre muni sur au moins une partie d'une de ses faces d'un revêtement photocatalytique à base de dioxyde de titane couvrant au plus 15% de la surface sous-jacente, ledit revêtement photocatalytique étant sous forme d'un réseau bidimensionnel de brins interconnectés.

L'invention a également pour objet un procédé d'obtention d'un matériau selon l'invention. Ce procédé préféré comprend les étapes suivantes :
- on dépose une couche de masque sur un substrat en verre,
- on procède au séchage de ladite couche de masque jusqu'à l'obtention d'un réseau bidimensionnel d'interstices,
- on dépose un revêtement à base de dioxyde de titane sur le substrat revêtu du masque,
- on retire la couche de masque.

Le séchage de la couche de masque, en provoquant sa rétractation, va créer par fissuration un réseau bidimensionnel d'interstices, lesquels seront remplis par le dioxyde de titane déposé ultérieurement.

La faible couverture par le revêtement selon l'invention permet de réduire considérablement l'impact négatif de l'oxyde de titane sur la réflexion lumineuse. Toutefois, il s'est avéré que l'activité photocatalytique restait élevée, d'autant plus que la quantité surfacique d'oxyde de titane, en partie déterminée par la hauteur des brins, peut être importante. Il semblerait que les radicaux libres générés par l'action photocatalytique de l'oxyde de titane aient la capacité de diffuser sur la surface sous-jacente (non-couverte par l'oxyde de titane) sur des distances très importantes, allant jusqu'à plusieurs micromètres ou dizaines de micromètres. Il est ainsi possible de conférer une forte activité photocatalytique et une super-hydrophilie à une surface non-couverte par l'oxyde de titane.

De préférence, le substrat est une feuille de verre. La feuille peut être plane ou bombée, et présenter tout type de dimensions, notamment supérieures à 1 mètre. Le verre est de préférence de type silico-sodo-calcique, mais d'autres types de verres, comme les verres borosilicatés ou les aluminosilicates peuvent aussi être utilisés. Le verre peut être clair ou extra-clair, ou encore teinté, par exemple en bleu, vert, ambre, bronze ou gris. L'épaisseur de la feuille de verre est typiquement comprise entre 0,5 et 19 mm, notamment entre 2 et 12 mm, voire entre 4 et 8 mm. Dans le domaine des cellules photovoltaïques, le verre est de préférence extra-clair ; il comprend de préférence une teneur pondérale totale en oxyde de fer d'au plus 150 ppm, voire 100 ppm et même 90 ppm, voire un rédox d'au plus 0,2, notamment 0,1 et même un rédox nul. On entend par « rédox » le rapport entre la teneur pondérale en oxyde de fer ferreux (exprimé sous la forme FeO) et la teneur pondérale totale en oxyde de fer (exprimé sous la forme Fe₂O₃).

De préférence, et dans le but de minimiser la réflexion, le revêtement photocatalytique couvre au plus 10%, voire 8% ou même 5% de la surface sous-jacente.

Le réseau de brins qui constitue le revêtement selon l'invention (et donc également le réseau d'interstices) est dit « bidimensionnel » car il s'étend principalement dans le plan du substrat. Comme expliqué plus en détail dans la suite du texte, les brins ont également une certaine « hauteur », qui correspond à l'épaisseur du revêtement, dans la direction orthogonale au plan du substrat.

Les brins, qui forment le réseau bidimensionnel constituant le revêtement selon l'invention, sont de préférence constitués de dioxyde de titane. Ce dernier est de préférence au moins partiellement cristallisé sous la forme anatase, qui est la plus active. Un mélange de phases anatase et rutile est également concevable. Le dioxyde de titane peut être pur ou dopé, par exemple par des métaux de transition (par exemple W, Mo, V, Nb), des ions lanthanides ou des métaux nobles (tels que par exemple platine, palladium), ou encore par des atomes d'azote, de carbone ou de fluor. Ces différentes formes de dopage permettent soit d'augmenter l'activité photocatalytique du matériau, soit de décaler le gap de l'oxyde de titane vers des longueurs d'onde proches du domaine du visible ou comprises dans ce domaine.

Le réseau bidimensionnel de brins interconnectés (et donc également le réseau bidimensionnel d'interstices) est de préférence aléatoire et/ou apériodique.

On entend par « brin » un dépôt de matière tridimensionnel dont une des dimensions, dans le plan du substrat, appelée « longueur » est beaucoup plus importante que l'autre dimension située dans le plan du substrat - appelée « largeur », et que la dimension située dans une direction orthogonale au plan du substrat, appelée « hauteur ».

La largeur des brins est de préférence comprise entre 0,5 et 50 micromètres, notamment entre 0,5 et 5 micromètres, voire d'au plus 1 micromètre. Lorsque le procédé selon l'invention est utilisé, la largeur des brins correspond à la largeur des interstices créés dans la couche de masque par le séchage.

La hauteur des brins (donc l'épaisseur du revêtement photocatalytique) est de préférence comprise entre 5 et 1000 nanomètres, notamment entre 10 et 150 nm. Une hauteur de brin élevée permet d'accroître l'activité photocatalytique du revêtement, sans toutefois augmenter sensiblement la réflexion lumineuse, qui dépend essentiellement de la surface couverte par le revêtement. L'invention est remarquable en ce qu'elle permet d'obtenir des épaisseurs conséquentes, et donc une forte activité photocatalytique, malgré un faible taux de couverture, contrairement à des solutions dans lesquelles des revêtements faiblement couvrants ont été obtenus grâce à des dépôts de très faibles quantités de matière. La hauteur des brins n'est limitée que par l'épaisseur de la couche de masque.

On entend par « ouverture du réseau » une zone non couverte par le revêtement photocatalytique, délimitée par des portions de brins, et laissant apparaître la surface sous-jacente. Lorsque le procédé selon l'invention est utilisé, les ouvertures du réseau correspondent aux zones préalablement couvertes par la couche de masque après séchage. Typiquement, la plupart des ouvertures du réseau sont délimitées par trois, quatre ou cinq portions de brins. De préférence, au moins 80%, voire 90%, des ouvertures du réseau sont délimitées par quatre portions de brins. Pour au moins 80%, voire 90% des ouvertures de réseau, l'angle formé à chaque coin par deux portions de brin adjacentes est de préférence compris entre 60 et 110°, notamment entre 80 et 100°.

Le procédé selon l'invention est remarquable en ce qu'il permet d'obtenir des interstices dont les parois sont orthogonales ou sensiblement orthogonales à la surface du substrat. L'angle formé entre les parois et la surface du substrat est typiquement compris entre 80 et 100°, notamment entre 85 et 95°. De ce fait, le dioxyde de titane déposé ensuite peut facilement atteindre la surface du substrat, même lorsque la largeur des interstices est très faible. Il est donc possible d'obtenir des brins très fins, dont l'effet sur la réflexion lumineuse est extrêmement limité.

La largeur et la hauteur des brins (et donc aussi des interstices) sont généralement homogènes sur toute la surface du revêtement. De préférence, le rapport entre la largeur maximale des brins et la largeur minimale des brins est d'au plus 4, notamment d'au plus 2. De même, la taille des ouvertures du réseau est de préférence relativement homogène, le rapport de surface entre l'ouverture la plus grande et l'ouverture la plus petite étant avantageusement d'au plus 4, voire d'au plus 2.

Un revêtement antireflet est de préférence interposé entre le substrat et le revêtement photocatalytique, ce qui permet de réduire encore le facteur de réflexion du matériau selon l'invention. On entend par revêtement antireflet un revêtement permettant d'atteindre un facteur de réflexion lumineuse plus faible que celui du substrat. Le revêtement antireflet est normalement totalement couvrant, au sens où il recouvre la totalité de la surface du substrat. Dans le procédé selon l'invention, le revêtement antireflet sera donc généralement déposé préalablement au dépôt de la couche de masque.

Le revêtement antireflet peut être constitué d'un empilement de couches alternant des couches à haut indices de réfraction et des couches à bas indice de réfraction. Il peut à titre d'exemple s'agir d'un empilement à quatre couches du type H/B/H/B, où chaque couche H (à haut indice) est par exemple en oxyde de titane ou en nitrure de silicium, et chaque couche B (à bas indice) est en silice. Dans un tel filtre interférentiel, les indices et les épaisseurs des couches sont choisies de manière à créer des interférences destructrices. Il peut notamment s'agir d'un empilement décrit dans la demande WO 01/94989 ou WO 2007/077373.

Selon un deuxième mode de réalisation, le revêtement antireflet peut être constitué d'une couche dont l'indice de réfraction est plus faible que celui du substrat. Il s'agit de préférence d'une couche de silice, parfaitement compatible avec les substrats verriers, mais d'autres oxydes sont possibles, tels que par exemple les oxydes d'aluminium, de zirconium, ou encore d'étain. Afin de minimiser son indice de réfraction, ce revêtement est de préférence poreux. Sa porosité est avantageusement comprise entre 10 et 80%. La porosité peut être ouverte ou fermée, de préférence fermée. Les pores sont de préférence des mésopores (dont le diamètre moyen est compris entre 2 et 50 nm), ou mieux encore des macropores (dont le diamètre moyen est de préférence compris entre 50 nm et 100 nm). De tels pores (mésopores ou macropores) peuvent être obtenus par un procédé sol-gel mettant en oeuvre des précurseurs organométalliques du matériau constitutif du revêtement (par exemple du tétraéthylorthosilicate - TEOS - dans le cas d'une couche de silice) et un agent porogène. L'agent porogène est emprisonné lors de la formation du revêtement par précipitation et condensation, puis est éliminé lors de la calcination du revêtement, créant ainsi les pores désirés. La taille, la forme et la quantité d'agents porogènes influeront donc directement sur le diamètre des pores, sur leur forme, et sur la porosité totale. Parmi les agents porogènes, on peut citer des tensioactifs anioniques, cationiques ou encore sous forme de copolymères blocs (tels que le bromure de cétyltriméthylammonium - CTAB - ou le polyoxyéthylène-polyoxypropylène), des polymères, notamment sous forme de billes (par exemple en polyméthacrylate de méthyle, polyester, polycarbonate, polypropylène, polystyrène...), ou encore des phases liquides organiques auto-organisées en gouttelettes dans une nanoémulsion (par exemple en huiles de paraffines). L'épaisseur géométrique du revêtement antireflet est de préférence comprise entre 10 nm et 10 micromètres, notamment entre 50 nm et 1 micromètre, voire entre 100 et 200 nm.

Selon un troisième mode de réalisation, le revêtement antireflet peut être constitué par une portion superficielle du verre partiellement ou totalement désalcalinisée, notamment par réaction avec un acide.

Le dépôt de la couche de masque est de préférence réalisé à l'aide d'une dispersion de particules colloïdales. Ces particules dispersées dans un solvant sont déposées sur le substrat par des procédés tels que le trempage, la pulvérisation, le rideau, l'aspersion ou encore l'enduction laminaire. Par séchage, le solvant est éliminé, provoquant des contraintes de traction au sein de la couche de masque, qui par relaxation forment les interstices. Après séchage, la couche de masque est constituée d'amas de particules séparées par les interstices.

Le solvant est de préférence majoritairement aqueux, voire constitué d'eau. Divers moyens connus peuvent être mis en oeuvre, si nécessaire, pour stabiliser la dispersion, et éviter ainsi l'agglomération des particules : contrôle du pH, ajout de tensioactif...

Le diamètre moyen des particules dans la dispersion et dans la couche de masque est de préférence compris entre 40 et 500 nm, notamment entre 50 et 300 nm, et même entre 80 et 250 nm.

La concentration en particules dans la dispersion est de préférence comprise entre 5 et 60% en poids, notamment entre 20 et 40%.

Dans un premier mode de réalisation, les particules sont polymériques, de préférence insolubles dans l'eau. Le polymère est de préférence un polymère ou un copolymère acrylique, par exemple un copolymère styrène-acrylique. Il peut également s'agir d'un polystyrène, polyacrylate, polyester, ou d'un mélange de ces divers polymères.

Afin de faciliter la formation du masque lors du séchage, ce dernier est de préférence réalisé à une température inférieure à la température de transition vitreuse (Tg) du polymère. L'écart avec la Tg est de préférence d'au moins 10°C, voire 20°C.

Dans un deuxième mode de réalisation, les particules sont minérales, notamment à base d'oxyde : par exemple silice, alumine ou encore oxyde de fer.

Le séchage est de préférence réalisé à une température proche de l'ambiante, par exemple entre 20 et 30°C. Le séchage se fait normalement à pression atmosphérique, mais peut se faire sous vide.

Après séchage, le réseau d'interstices peut être nettoyé, par exemple à l'aide d'une source plasma, à pression atmosphérique.

Le revêtement photocatalytique peut ensuite être déposé, par diverses techniques connues, telles que la pulvérisation cathodique, le dépôt chimique en phase vapeur (CVD), notamment assisté par plasma (PECVD), sous vide ou à pression atmosphérique (APPECVD), l'évaporation, la pyrolyse en phase liquide, ou encore un procédé de type sol-gel.

Dans le procédé de pulvérisation cathodique, notamment assisté par champ magnétique (procédé magnétron), des espèces excitées d'un plasma viennent arracher les atomes d'une cible située en regard du substrat à revêtir. Pour le dépôt de la couche d'oxyde de titane, la cible peut notamment être en titane métallique ou en TiOₓ, le plasma devant contenir de l'oxygène (on parle de pulvérisation cathodique réactive).

Le dépôt chimique en phase vapeur, généralement désigné sous son acronyme anglais CVD est un procédé de pyrolyse utilisant des précurseurs gazeux qui se décomposent sous l'effet de la chaleur du substrat. Dans le cas de l'oxyde de titane, les précurseurs peuvent être à titre d'exemple du tétrachlorure de titane, du tétraisopropoxyde de titane ou du tétraorthobutoxyde de titane. Ce type de procédé sera utilisé lorsque la couche de masque peut résister aux températures élevées, notamment lorsqu'elle est de nature minérale. Dans les procédés PECVD (sous vide) et APPECVD (sous pression atmosphérique), en revanche, la décomposition des précurseurs se fait sous l'action d'un plasma, et non sous l'effet de la chaleur, ce qui permet d'employer des couches de masque de nature organique.

Le dépôt est généralement réalisé sur toute la surface du substrat revêtu de sa couche de masque. Ainsi, l'oxyde de titane est déposé à la fois sur la surface de la couche de masque et dans les interstices.

On procède ensuite au retrait de la couche de masque, afin de révéler le réseau bidimensionnel de brins à base d'oxyde de titane.

Le retrait de la couche de masque est de préférence réalisé à l'aide d'un solvant, par exemple de l'eau, un alcool ou encore de l'acétone. La température lors du retrait peut être la température ambiante, mais un léger chauffage est possible.

L'étape de retrait peut être suivie d'un traitement thermique, notamment du type trempe, bombage, recuit, ou d'un traitement rapide à l'aide d'un rayonnement laser ou d'une flamme, notamment lorsque la couche de dioxyde de titane a été déposée par pulvérisation cathodique. Ce traitement thermique est destiné à cristalliser l'oxyde de titane sous la forme anatase. Le traitement rapide est de préférence un traitement tel que décrit dans la demande WO 2008/096089.

Le matériau selon l'invention présente de préférence un facteur de transmission lumineuse (au sens de la norme ISO 9050 :2003) d'au moins 80%, voire 85% et même 90%, et/ou un facteur de réflexion lumineuse (au sens de la norme ISO 9050 :2003) d'au plus 5%, notamment 3%.

L'invention a également pour objet un vitrage ou une cellule photovoltaïque comprenant au moins un matériau selon l'invention.

Le vitrage peut être simple ou multiple (notamment double ou triple), au sens où il peut comprendre plusieurs feuilles de verre ménageant un espace rempli de gaz. Le vitrage peut également être feuilleté et/ou trempé et/ou durci et/ou bombé.

L'autre face du matériau selon l'invention, ou le cas échéant une face d'un autre substrat du vitrage multiple, peut être revêtue d'une autre couche fonctionnelle ou d'un empilement de couches fonctionnelles. Il peut notamment s'agir d'une autre couche photocatalytique. Il peut aussi s'agir de couches ou d'empilements à fonction thermique, notamment antisolaires ou bas-émissifs, par exemple des empilements comprenant une couche d'argent protégée par des couches diélectriques. Il peut encore s'agir d'une couche miroir, notamment à base d'argent. Il peut enfin s'agir d'une laque ou d'un émail destinée à opacifier le vitrage pour en faire un panneau de parement de façade appelé allège. L'allège est disposée sur la façade aux côtés des vitrages non opacifiés et permet d'obtenir des façades entièrement vitrées et homogènes du point de vue esthétique.

Dans la cellule photovoltaïque selon l'invention, le matériau selon l'invention est de préférence le substrat de face avant de la cellule, c'est-à-dire celui qui est le premier traversé par le rayonnement solaire. Le revêtement photocatalytique est alors positionné vers l'extérieur, afin que l'effet autonettoyant puisse se manifester utilement.

Pour les applications en tant que cellules photovoltaïques, et afin de maximiser le rendement énergétique de la cellule, plusieurs améliorations peuvent être apportées, cumulativement ou alternativement :
- La feuille de verre peut avantageusement être revêtue, sur la face opposée à la face munie du revêtement selon l'invention, d'au moins une couche mince transparente et électroconductrice, par exemple à base de SnO₂:F, SnO₂:Sb, ZnO:Al, ZnO:Ga. Ces couches peuvent être déposées sur le substrat par différents procédés de dépôt, tels que le dépôt chimique en phase vapeur (CVD) ou le dépôt par pulvérisation cathodique, notamment assisté par champ magnétique (procédé magnétron). Dans le procédé CVD, des précurseurs halogénures ou organométalliques sont vaporisés et transportés par un gaz vecteur jusqu'à la surface du verre chaud, où ils se décomposent sous l'effet de la chaleur pour former la couche mince. L'avantage du procédé CVD est qu'il est possible de le mettre en oeuvre au sein du procédé de formage de la feuille de verre, notamment lorsqu'il s'agit d'un procédé de flottage. Il est ainsi possible de déposer la couche au moment où la feuille de verre est sur le bain d'étain, à la sortie du bain d'étain, ou encore dans l'étenderie, c'est-à-dire au moment où la feuille de verre est recuite afin d'éliminer les contraintes mécaniques.
- La feuille de verre revêtue d'une couche transparente et électroconductrice peut être à son tour revêtue d'un semi-conducteur à base de silicium amorphe ou polycristallin, de chalcopyrites (notamment du type CIS - CuInSe₂ ou CIGS - CuInGaSe₂) ou de CdTe pour former une cellule photovoltaïque. Dans ce cas, un autre avantage du procédé CVD réside en l'obtention d'une rugosité plus forte, qui génère un phénomène de piégeage de la lumière, lequel augmente la quantité de photons absorbée par le semi-conducteur.
- la surface de la feuille de verre peut être texturée, par exemple présenter des motifs (notamment en pyramide), tel que décrit dans les demandes WO 03/046617, WO 2006/134300, WO 2006/134301 ou encore WO 2007/015017. Ces texturations sont en général obtenues à l'aide d'un formage du verre par laminage.

L'invention sera mieux comprise à la lumière des exemples non limitatifs qui suivent.

Sur un substrat en verre extra-clair de 4 mm d'épaisseur commercialisé par la Demanderesse sous la marque SGG Diamant^{®}, est déposé, par des techniques connues de pulvérisation cathodique, un revêtement antireflet constitué des quatre couches suivantes (l'épaisseur géométrique de chacune des couches est indiquée entre parenthèses) :
Verre / Si₃N₄ (18 nm) / SiO₂ (23 nm) / Si₃N₄ (115 nm) / SiO₂ (90 nm).

Grâce au revêtement antireflet, déposé sur les deux faces du substrat, le facteur de transmission lumineuse est de 97,4%.

Sur ce substrat, on dépose une couche de masque de la manière suivante.

La dispersion colloïdale employée est un mélange de 97% d'une dispersion aqueuse d'un copolymère acrylique commercialisée sous la dénomination NéoCryl^{®} XK-52 par la société DSM NeoResins et de 3% d'une dispersion aqueuse d'un copolymère acrylique commercialisée sous la dénomination NéoCryl^{®} XK-240 par la société DSM NeoResins.

La première dispersion est composée pour 60 % en poids d'eau et pour 40 % en poids de particules d'un copolymère acrylique dont le diamètre moyen est d'environ 70 nm. La température de transition vitreuse du polymère est de 115°C. La viscosité de la dispersion à 25°C est de 15 mPa.s et son pH de 5,1.

La deuxième dispersion est composée pour 48% en poids d'eau et pour 52% en poids de particules d'un copolymère acrylique dont le diamètre moyen est d'environ 180 nm (mesuré par des méthodes connues, mettant en oeuvre la diffusion de la lumière). La température de transition vitreuse du polymère est de -4°C. La viscosité de la dispersion à 25°C est de 160 mPa.s et son pH de 7,5.

Le dépôt est réalisé par trempage (dip coating) à une vitesse de 30 cm par minute. Le séchage se fait à température ambiante. L'épaisseur de la couche de masque après séchage est d'environ 7 à 10 micromètres.

Les interstices créés par le séchage sont ensuite nettoyés à l'aide d'un plasma N₂/O₂.

Sur le substrat muni de la couche de masque séchée, on vient déposer une couche de dioxyde de titane par pulvérisation cathodique magnétron, à l'aide d'une cible en titane métallique, sous un plasma d'argon et d'oxygène.

L'épaisseur de dioxyde de titane obtenue (hauteur des brins) est de 50 nm ou 100 nm selon les échantillons.

La couche de masque est ensuite retirée à l'aide d'un mélange d'eau déminéralisée et d'éthanol.

Le matériau obtenu est ensuite recuit à une température de 620°C pendant 12 minutes.

On obtient ainsi des revêtements photocatalytiques sous la forme d'un réseau de brins interconnectés s'étendant sur la surface du substrat. Environ 10% de la surface est couverte par le revêtement. La largeur des brins varie typiquement entre 5 et 15 micromètres.

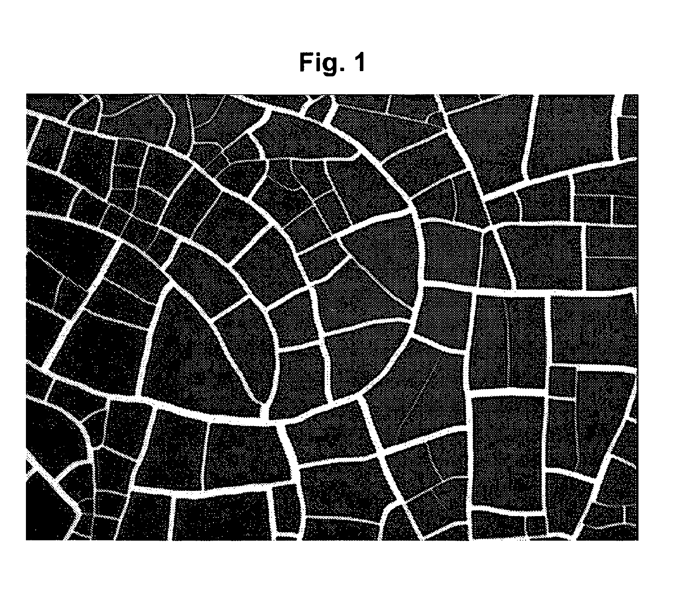

La morphologie des revêtements est représentée en Figure 1, telle qu'elle est vue par microscopie optique. On distingue sur cette figure le réseau de brins interconnectés (en clair) et les ouvertures du réseau (en sombre).

La baisse du facteur de transmission lumineuse due à l'ajout du revêtement photocatalytique n'est que de 2% (en absolu) pour le revêtement dont l'épaisseur est de 50 nm et de 5% pour le revêtement dont l'épaisseur est de 100 nm. A titre de comparaison, une couche de dioxyde de titane totalement couvrante et de même épaisseur entraînerait une baisse d'environ 40%.

L'activité photocatalytique est évaluée grâce à une mesure de vitesse de dégradation de bleu de méthylène en présence de rayonnement ultraviolet. Une solution aqueuse de bleu de méthylène est placée en contact dans une cellule étanche avec le substrat revêtu (ce dernier formant le fond de la cellule). Après exposition à un rayonnement ultraviolet pendant 30 minutes, la concentration de bleu de méthylène est évaluée par une mesure de transmission lumineuse. La valeur d'activité photocatalytique (notée Kb et exprimée en g.l⁻¹.min⁻¹), correspond à la diminution de la concentration en bleu de méthylène par unité de temps d'exposition. L'activité Kb mesurée pour les deux échantillons selon l'invention est de 11 g.l⁻¹.min⁻¹.

L'angle de contact à l'eau des échantillons selon l'invention, de l'ordre de 50° à 60° sans irradiation UV, passe à 5° après une heure d'irradiation. La surface devient donc rapidement super-hydrophile.

## Revendications

1. Matériau comprenant un substrat en verre muni sur au moins une partie d'une de ses faces d'un revêtement photocatalytique à base de dioxyde de titane couvrant au plus 15% de la surface sous-jacente, ledit revêtement photocatalytique étant sous forme d'un réseau bidimensionnel de brins interconnectés.

2. Matériau selon la revendication précédente, tel que le substrat est une feuille de verre.

3. Matériau selon l'une des revendications précédentes, tel que le revêtement photocatalytique couvre au plus 10%, voire 8% ou même 5% de la surface sous-jacente.

4. Matériau selon l'une des revendications précédentes, tel que le réseau est aléatoire et apériodique.

5. Matériau selon l'une des revendications précédentes, tel que la largeur des brins est comprise entre 0,5 et 50 micromètres.

6. Matériau selon l'une des revendications précédentes, tel que la hauteur des brins est comprise entre 5 et 1000 nanomètres.

7. Matériau selon l'une des revendications précédentes, tel qu'au moins 80% des ouvertures du réseau sont délimitées par quatre portions de brins.

8. Matériau selon l'une des revendications précédentes, tel qu'un revêtement antireflet est interposé entre le substrat et le revêtement photocatalytique.

9. Matériau selon la revendication précédente, tel que le revêtement antireflet est constitué d'une couche dont l'indice de réfraction est plus faible que celui du substrat, notamment d'une couche de silice.

10. Vitrage ou cellule photovoltaïque comprenant au moins un matériau selon l'une des revendications précédentes.

11. Procédé d'obtention d'un matériau selon l'une des revendications 1 à 9, comprenant les étapes suivantes :
- on dépose une couche de masque sur un substrat en verre,
- on procède au séchage de ladite couche de masque jusqu'à l'obtention d'un réseau bidimensionnel d'interstices,
- on dépose un revêtement à base de dioxyde de titane sur le substrat revêtu du masque,
- on retire la couche de masque.

12. Procédé selon la revendication précédente, tel que le dépôt de la couche de masque est réalisé à l'aide d'une dispersion de particules colloïdales.

13. Procédé selon la revendication précédente, tel que le diamètre moyen des particules dans la dispersion et dans la couche de masque est compris entre 40 et 500 nm, notamment entre 50 et 300 nm, et même entre 80 et 250 nm.

14. Procédé selon l'une des revendications 12 ou 13,
tel que les particules sont polymériques, de préférence insolubles dans l'eau.

15. Procédé selon l'une des revendications de procédé précédentes, tel que le dépôt du revêtement à base de dioxyde de titane est réalisé par pulvérisation cathodique.

## Patentansprüche

1. Material, umfassend ein Glassubstrat, das auf wenigstens einem Teil von einer seiner Seiten mit einer photokatalytischen Beschichtung auf Titandioxidbasis versehen ist, die höchstens 15 % der darunter liegenden Fläche bedeckt, wobei die photokatalytische Beschichtung in Form eines zweidimensionalen Netzes aus untereinander verbundenen Fasern vorliegt.

2. Material nach dem vorstehenden Anspruch, welches derart ist, dass das Substrat eine Glasscheibe ist.

3. Material nach einem der vorstehenden Ansprüche, welches derart ist, dass die photokatalytische Beschichtung höchstens 10 %, sogar 8 % oder gar 5 % der darunter liegenden Fläche bedeckt.

4. Material nach einem der vorstehenden Ansprüche, welches derart ist, dass das Netz zufällig und aperiodisch ist.

5. Material nach einem der vorstehenden Ansprüche, welches derart ist, dass die Breite der Fasern zwischen 0,5 und 50 Mikrometern beträgt.

6. Material nach einem der vorstehenden Ansprüche, welches derart ist, dass die Höhe der Fasern zwischen 5 und 1000 Nanometern beträgt.

7. Material nach einem der vorstehenden Ansprüche, welches derart ist, dass wenigstens 80 % der Öffnungen des Netzes durch vier Faserabschnitte begrenzt sind.

8. Material nach einem der vorstehenden Ansprüche, welches derart ist, dass zwischen dem Substrat und der photokatalytischen Beschichtung eine Antireflexbeschichtung eingefügt ist.

9. Material nach dem vorstehenden Anspruch, welches derart ist, dass die Antireflexbeschichtung von einer Schicht, deren Brechungsindex geringer als der des Substrats ist, insbesondere von einer Siliziumdioxidschicht gebildet ist.

10. Verglasung oder photovoltaische Zelle, umfassend wenigstens ein Material nach einem der vorstehenden Ansprüche.

11. Verfahren zum Erhalten eines Materials nach einem der Ansprüche 1 bis 9, umfassend die folgenden Schritte:
- eine Maskenschicht wird auf einem Glassubstrat abgeschieden,
- die Maskenschicht wird bis zum Erhalt eines zweidimensionalen Netzes aus Zwischenräumen getrocknet,
- auf dem mit der Maske überzogenen Substrat wird eine Beschichtung auf Titandioxidbasis abgeschieden,
- die Maskenschicht wird entfernt.

12. Verfahren nach dem vorstehenden Anspruch, welches derart ist, dass das Abscheiden der Maskenschicht mit Hilfe einer Dispersion von kolloidalen Partikeln vollzogen wird.

13. Verfahren nach dem vorstehenden Anspruch, welches derart ist, dass der mittlere Durchmesser der Partikel in der Dispersion und in der Maskenschicht zwischen 40 und 500 nm, insbesondere zwischen 50 und 300 nm und sogar zwischen 80 und 250 nm beträgt.

14. Verfahren nach einem der Ansprüche 12 oder 13, welches derart ist, dass die Partikel polymer, vorzugsweise wasserunlöslich sind.

15. Verfahren nach einem der vorstehenden Verfahrensansprüche, welches derart ist, dass das Abscheiden der Beschichtung auf Titandioxidbasis durch Kathodenzerstäubung vollzogen wird.

## Claims

1. Material comprising a glass substrate provided on at least one portion of one of its faces with a photocatalytic coating based on titanium dioxide that covers at most 15% of the subjacent surface, said photocatalytic coating being in the form of a two-dimensional network of interconnected strands.

2. Material according to the preceding claim, such that the substrate is a sheet of glass.

3. Material according to one of the preceding claims, such that the photocatalytic coating covers at most 10%, or 8% or even 5% of the subjacent surface.

4. Material according to one of the preceding claims, such that the network is random and aperiodic.

5. Material according to one of the preceding claims, such that the width of the strands is between 0.5 and 50 micrometres.

6. Material according to one of the preceding claims, such that the height of the strands is between 5 and 1000 nanometres.

7. Material according to one of the preceding claims, such that at least 80% of the openings of the network are delimited by four portions of strands.

8. Material according to one of the preceding claims, such that an antireflection coating is interposed between the substrate and the photocatalytic coating.

9. Material according to one of the preceding claims, such that the antireflection coating is constituted of a layer for which the refractive index is lower than that of the substrate, especially a layer of silica.

10. Glazing or photovoltaic cell comprising at least one material according to one of the preceding claims.

11. Process for obtaining a material according to one of Claims 1 to 9, comprising the following steps:
- depositing a mask layer on a glass substrate,
- drying said mask layer until a two-dimensional network of interstices is obtained,
- depositing a coating based on titanium dioxide on the substrate coated with the mask,
- removing the mask layer.

12. Process according to the preceding claim, such that the deposition of the mask layer is carried out using a dispersion of colloidal particles.

13. Process according to the preceding claim, such that the mean diameter of the particles in the dispersion and in the mask layer is preferably between 40 and 500 nm, in particular between 50 and 300 nm, and even between 80 and 250 nm.

14. Process according to one of claims 12 or 13, such that the particles are polymeric, preferably insoluble in water.

15. Process according to one of the preceding process claims, such that the coating based on titanium dioxide is deposited by sputtering.
